# DEMANDE DE BREVET EUROPEEN

(11) **EP 1 498 384 A1**
(43) Date de publication de la demande: **19.01.2005**
(21) Numéro de dépôt: 04356123.2
(22) Date de dépôt: 05.07.2004
(51) Int. Cl.: B66C 1/36

(54) **Mousqueton à deux doigts opposés**

(30) Priorité: 16.07.2003 FR 0308884
(71) Demandeur: Etablissements Simond, 74310 Les Houches (FR)
(72) Inventeur: Simond, Ludger, 74310 Les Houches (FR)
(74) Mandataire: Poncet, Jean-François

(57) **Abrégé**

Le mousqueton selon l'invention comprend un corps de mousqueton (1) fermé par deux doigts de fermeture (5, 9) pivotant chacun dans des directions opposées (8, 12). Les deux doigts de fermeture (5, 9) sont séparés par un espace d'insertion (13). L'espace d'insertion (13) a une largeur (L) suffisante pour permettre l'engagement d'une boucle orientée perpendiculairement à la direction moyenne des doigts de fermeture (5, 9). L'espace d'insertion (13) a un rétrécissement progressif en direction de la seconde extrémité (7, 11) des doigts de fermeture (5, 9). De la sorte, on peut engager une boucle entre les doigts de fermeture (5, 9), autour de la seconde extrémité (3) du corps de mousqueton (1), et en poussant la boucle, on l'insère automatiquement dans le mousqueton, qui ensuite reste verrouillé.

## Description

La présente invention concerne les mousquetons de sécurité, nécessitant deux actions distinctes pour pouvoir être ouverts.

Les mousquetons habituellement utilisés dans la pratique de l'alpinisme, de la spéléologie, ainsi que dans les travaux en hauteur dans l'industrie et dans le bâtiment comportent généralement un corps de mousqueton en anneau ouvert ayant une première extrémité et une seconde extrémité en regard l'une de l'autre et séparées par une ouverture, avec un doigt de fermeture à deux extrémités articulé par sa première extrémité à la première extrémité du corps pour pivoter vers l'intérieur du mousqueton entre une position fermée dans laquelle sa seconde extrémité de doigt est en contact de la seconde extrémité du corps et une position ouverte dans laquelle sa seconde extrémité de doigt est à l'écart de la seconde extrémité du corps, des moyens de rappel élastiques sollicitant le doigt de fermeture vers la position fermée.

On comprend que, en l'absence d'un moyen de sécurité supplémentaire, le doigt de fermeture peut pivoter de façon accidentelle vers la position ouverte sous l'action d'une contrainte, par exemple sous l'action d'un effort imprimé par un lien tel qu'une corde qui passe dans le mousqueton.

Pour éviter un pivotement accidentel vers la position ouverte, on a depuis longtemps imaginé des mousquetons de sécurité ayant un moyen de verrouillage supplémentaire.

Par exemple, le moyen de verrouillage peut être une bague à vis venant chevaucher la seconde extrémité du doigt et la seconde extrémité du corps en position fermée, ou une bague à ressort repoussée dans la position de chevauchement, ou un levier venant en appui contre le doigt de fermeture pour interdire son pivotement. Tous ces moyens produisent le blocage en rotation du doigt de fermeture.

L'inconvénient est que l'action de verrouillage nécessite une opération volontaire de l'utilisateur, par exemple la rotation de la bague de verrouillage. Il en résulte que le verrouillage n'est pas certain, l'utilisateur pouvant oublier l'opération nécessaire pour obtenir le verrouillage. De la sorte, la sécurité n'est pas toujours respectée.

Par ailleurs, le document FR 2 766 884 décrit un mousqueton de sécurité dans lequel la sécurité est assurée de façon automatique en prévoyant deux doigts de fermeture qui pivotent dans deux directions opposées. Ainsi, un effort exercé dans l'une des directions pourrait provoquer l'ouverture de l'un des deux doigts, mais provoque nécessairement le maintien du second doigt en position fermée, de sorte que le mousqueton reste fermé.

Dans ce document, le mousqueton comprend un corps de mousqueton en anneau ouvert ayant une première extrémité et une seconde extrémité en regard l'une de l'autre et séparées par une ouverture. Un doigt de fermeture extérieur est articulé par sa première extrémité à la première extrémité du corps de mousqueton pour pivoter dans une première direction vers l'extérieur du mousqueton. Un doigt de fermeture intérieur est articulé par sa première extrémité à la première extrémité du corps de mousqueton et peut pivoter dans une seconde direction vers l'intérieur du mousqueton. Dans plusieurs modes de réalisation, les doigts de fermeture sont constitués d'un fil de matériau élastiquement flexible plié qui forme une boucle allongée dont les extrémités recourbées sont engagées dans deux trous transversaux respectifs décalés du corps de mousqueton.

En position fermée, les deux doigts de fermeture ont leurs secondes extrémités qui viennent en contact de la seconde extrémité du corps de mousqueton, et les deux doigts de fermeture sont parallèles l'un à l'autre et à proximité l'un de l'autre, l'encombrement transversal global des doigts de fermeture étant sensiblement égal à l'encombrement transversal du fil métallique formant le corps de mousqueton.

Avec une telle structure connue de mousqueton à deux doigts de fermeture, la sécurité est assurée de façon correcte. Cependant, l'engagement d'un lien tel qu'une corde dans le mousqueton nécessite une double manoeuvre: une première manoeuvre consiste à écarter le doigt de fermeture extérieur vers l'extérieur du mousqueton et à engager ensuite le lien tel que la corde entre les deux doigts de fermeture ; une seconde manoeuvre consiste à repousser le doigt de fermeture intérieur vers l'intérieur du mousqueton et à faire passer le lien tel que la corde vers l'espace intérieur du mousqueton. Les deux doigts de fermeture sont ensuite rappelés en position de fermeture par des moyens élastiques de rappel. Et la double opération inverse est nécessaire pour sortir le lien tel que la corde hors du mousqueton.

Ces opérations, notamment pour l'engagement d'un lien tel qu'une corde vers l'intérieur du mousqueton, sont relativement complexes, et nécessitent en général l'intervention de deux mains de l'utilisateur, l'une pour tenir le mousqueton ou le doigt extérieur à ouvrir, l'autre pour tenir le lien tel que la corde à insérer. Il en résulte que l'utilisation d'un tel mousqueton de sécurité ne peut pas être assurée d'une seule main, contrairement à ce qui se passe dans les mousquetons simples, sans sécurité, mousquetons dans lesquels l'engagement d'une corde peut être effectué par simple appui radial de la corde vers l'intérieur du mousqueton contre le doigt de fermeture.

On connaît par ailleurs du document US 5,480,202 A, un crochet de grue pour soulever des charges de plusieurs tonnes, comportant un corps de crochet en forme de J dont une première extrémité supérieure a un trou d'accrochage, et dont la partie inférieure incurvée peut être fermée par une plaque de fermeture intérieure et une plaque de fermeture extérieure.

Les plaques de fermeture sont toutes deux articulées selon leur première extrémité à une zone intermédiaire du corps de crochet, nettement à l'écart de la première extrémité supérieure à trou d'accrochage.

En position fermée, la plaque de fermeture extérieure vient en appui par une zone intermédiaire, sur la seconde extrémité du corps de crochet. Les deux plaques s'écartent progressivement l'une de l'autre en direction de leur seconde extrémité libre. Le but de ces moyens est d'empêcher l'accrochage intempestif du crochet de grue sur des palissades, des fils électriques ou autres éléments de construction. Outre le fait que ce dispositif ne concerne pas les mousquetons de sécurité en anneau, le document ne mentionne pas le problème d'une utilisation d'un mousqueton à l'aide d'une seule main, et les moyens décrits ne permettent pas une telle utilisation. De plus, la seconde extrémité de plaque extérieure, qui dépasse nettement à l'écart de la seconde extrémité du corps de crochet, constitue un élément encombrant qui ne permettrait pas, appliquée à un mousqueton en anneau, d'assurer une sécurité satisfaisante : une corde passée dans le crochet mais pouvant glisser le long de celui-ci pourrait venir en butée contre la seconde extrémité de plaque extérieure et rentrer une seconde fois à l'intérieur du crochet pour s'enlever de ce fait toute seule de l'intérieur de celui-ci.

Le problème proposé par la présente invention est de concevoir une nouvelle structure de mousqueton de sécurité, qui assure une sécurité automatique aussi bonne qu'un mousqueton connu à deux doigts de fermeture opposés, et qui simultanément permette une manoeuvre plus aisée pour l'introduction d'un lien tel qu'une corde dans le mousqueton, permettant l'introduction du lien tel que la corde avec une seule main.

Pour atteindre ces buts ainsi que d'autres, l'invention propose un mousqueton de sécurité pour accrochage d'un lien, comprenant :
- un corps de mousqueton en anneau ouvert ayant une première extrémité et une seconde extrémité en regard l'une de l'autre et séparées par une ouverture,
- un doigt de fermeture extérieur à deux extrémités, articulé selon sa première extrémité sur la première extrémité du corps de mousqueton pour pivoter par rapport au corps de mousqueton dans une première direction vers l'extérieur du mousqueton, entre une position fermée dans laquelle sa seconde extrémité est au contact d'une zone de surface extérieure du corps de mousqueton et une position ouverte dans laquelle sa seconde extrémité est à l'écart de la seconde extrémité du corps de mousqueton, et avec des moyens de rappel élastiques sollicitant le doigt de fermeture extérieur vers sa position fermée,
- un doigt de fermeture intérieur à deux extrémités, articulé selon sa première extrémité sur ou au voisinage de la première extrémité du corps de mousqueton pour pivoter par rapport au corps de mousqueton dans une seconde direction vers l'intérieur du mousqueton, entre une position fermée dans laquelle sa seconde extrémité vient au contact d'une zone de surface intérieure du corps de mousqueton, et une position ouverte dans laquelle sa seconde extrémité est à l'écart de la seconde extrémité du corps de mousqueton, avec des moyens de rappel élastiques sollicitant le doigt de fermeture intérieur vers la position fermée,
- un espace d'insertion est aménagé entre les deux doigts de fermeture,
- l'espace d'insertion a une largeur suffisante pour permettre l'engagement du lien formé en une boucle orientée perpendiculairement à la direction moyenne des doigts de fermeture,
- l'espace d'insertion a un rétrécissement progressif en direction de la seconde extrémité des doigts de fermeture,
- la zone de surface intérieure et la zone de surface extérieure sont en retrait de la seconde extrémité du corps de mousqueton, ladite seconde extrémité du corps de mousqueton formant un nez d'engagement qui dépasse dans l'espace d'insertion.

Une augmentation de largeur de l'espace d'insertion conduit nécessairement à augmenter l'encombrement global du mousqueton. Or cet encombrement global doit souvent être maintenu dans des valeurs relativement réduites, comme c'est le cas pour la pratique de l'alpinisme et de la spéléologie, et/ou pour des accrochages aisément déplaçables. On choisira donc de préférence une largeur d'espace d'insertion qui est juste suffisante pour autoriser l'engagement d'une telle boucle formée par incurvation d'un lien couramment utilisé, avantageusement d'une corde de diamètre habituel.

En pratique, lorsqu'on désire utiliser le mousqueton pour un accrochage de liens courants tels que des cordes d'alpinisme ou de spéléologie, la boucle a un diamètre de 2,5 à 4 cm environ, fréquemment de 3 cm environ. Il est pour cela avantageux de donner à la largeur de l'espace d'insertion une valeur peu différente du diamètre de la boucle.

Des dimensions supérieures sont toutefois possibles et avantageuses pour réaliser des mousquetons utilisés par exemple dans l'industrie, ou pour des accrochages fixes que l'on ne désire pas déplacer fréquemment et dans lesquels on recherche une plus grande facilité de manoeuvre.

On trouvera avantage à ce que le nez d'engagement comporte un tronçon d'extrémité qui est à l'écart de l'un et l'autre des doigts de fermeture, réalisant deux interstices entre le nez d'engagement et respectivement le doigt de fermeture extérieur et le doigt de fermeture intérieur.

Dans une réalisation pratique, le doigt de fermeture intérieur est formé d'un fil de matériau élastiquement flexible plié pour former une boucle allongée dont les extrémités recourbées sont engagées dans deux trous transversaux respectifs décalés de la première extrémité du corps de mousqueton pour constituer la première extrémité articulée du doigt de fermeture intérieur, l'élasticité du fil formant le doigt de fermeture intérieur assurant son rappel en position fermée.

Une possibilité consiste à prévoir que le doigt de fermeture extérieur est une tige généralement cylindrique, articulée sur la première extrémité du corps de mousqueton.

Dans ce cas, on peut avantageusement prévoir que la première extrémité du doigt de fermeture extérieur comporte un bras intérieur se développant dans l'espace intérieur du mousqueton et sur lequel s'articule le doigt de fermeture intérieur, ledit doigt de fermeture intérieur étant formé d'un fil de matériau élastiquement flexible plié pour former une boucle dont les extrémités recourbées sont engagées dans deux trous transversaux respectifs décalés du bras intérieur pour constituer la première extrémité articulée du doigt de fermeture intérieur, l'élasticité propre du fil formant le doigt de fermeture intérieur assurant alors le rappel des deux doigts de fermeture en position fermée.

Une autre possibilité consiste à prévoir que le doigt de fermeture extérieur est formé d'un fil de matériau élastiquement flexible plié pour former une boucle allongée dont les extrémités recourbées sont engagées dans deux trous transversaux respectifs décalés de la première extrémité du corps de mousqueton pour constituer la première extrémité articulée du doigt de fermeture extérieur, l'élasticité propre du fil formant le doigt de fermeture extérieur assurant son rappel en position fermée.

D'autres objets, caractéristiques et avantages de la présente invention ressortiront de la description suivante de modes de réalisation particuliers, faite en relation avec les figures jointes, parmi lesquelles :
- la figure 1 est une vue de côté d'un mousqueton selon un premier mode de réalisation de la présente invention, en position fermée ;
- la figure 2 est une vue de côté d'un mousqueton selon un second mode de réalisation de la présente invention, en position fermée ;
- la figure 3 est une vue en perspective du mousqueton de la figure 2, en position fermée ;
- la figure 4 est une vue en perspective du mousqueton de la figure 3, pendant l'insertion d'une boucle dans l'espace d'insertion ; et
- la figure 5 est une vue en perspective du mousqueton de la figure 3, pendant le mouvement de pénétration de la boucle dans le mousqueton.

Dans les deux modes de réalisation illustrés sur les figures, un mousqueton de sécurité selon l'invention comprend un corps de mousqueton 1 en anneau ouvert ayant une première extrémité 2 et un seconde extrémité 3 en regard l'une de l'autre et séparées par une ouverture 4.

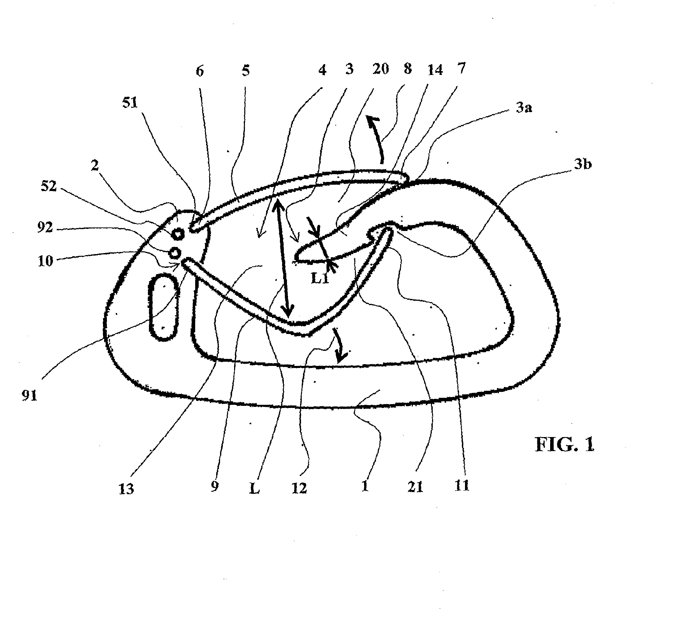

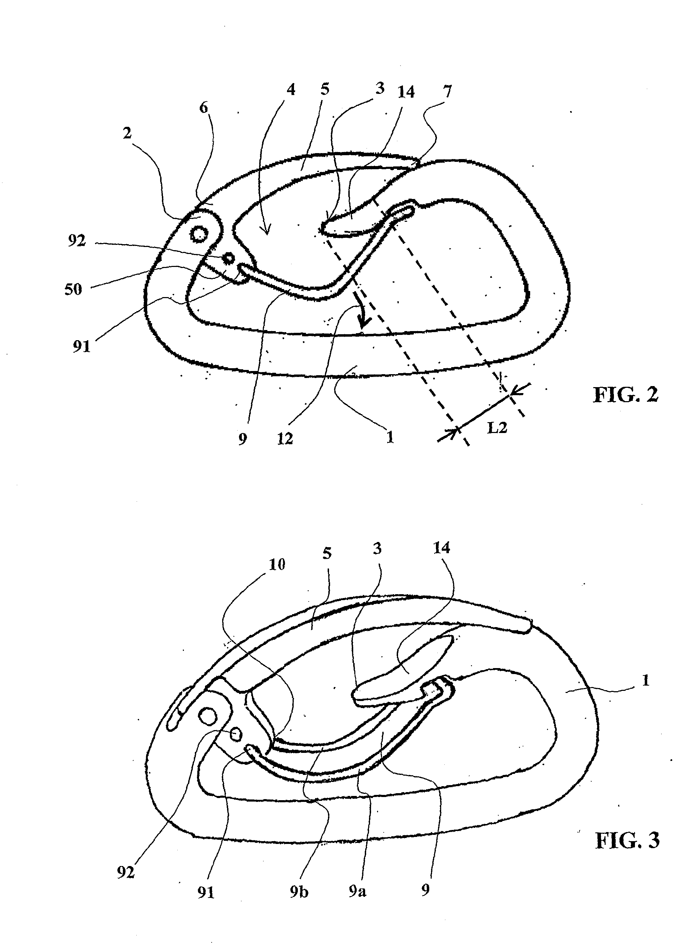

Un doigt de fermeture extérieur 5 comprend une première extrémité 6 et une seconde extrémité 7. Le doigt de fermeture extérieur 5 est articulé par sa première extrémité 6 à la première extrémité 2 du corps de mousqueton 1 pour pivoter dans une première direction vers l'extérieur du mousqueton, comme illustré par la flèche 8, entre une position fermée telle qu'illustrée sur la figure 1 ou la figure 2 et dans laquelle sa seconde extrémité 7 est en contact d'une zone de surface extérieure 3a du corps de mousqueton 1 au voisinage de sa seconde extrémité 3, et une position ouverte dans laquelle sa seconde extrémité 7 est à l'écart de la seconde extrémité 3 du corps de mousqueton 1.

Des moyens de rappel élastiques, qui seront décrits ultérieurement, sollicitent le doigt de fermeture extérieur 5 vers la position fermée.

Un doigt de fermeture intérieur 9 comprend deux extrémités 10 et 11. Le doigt de fermeture intérieur 9 est articulé selon sa première extrémité 10 par rapport au corps de mousqueton 1 pour pivoter dans une seconde direction 12 vers l'intérieur du mousqueton entre une position fermée illustrée sur les figures 1 et 2 dans laquelle sa seconde extrémité 11 vient au contact d'une zone de surface intérieure 3b du corps de mousqueton 1 et une position ouverte dans laquelle sa seconde extrémité 11 est à l'écart de la seconde extrémité 3 du corps de mousqueton 1.

Des moyens de rappel élastiques sollicitent le doigt de fermeture intérieur 9 vers sa position fermée.

Dans les deux modes de réalisation illustrés sur les figures 1 et 2, et comme on le voit mieux sur la figure 3, le doigt de fermeture intérieur 9 a une structure connue en fil élastiquement flexible conformé en boucle allongée, les deux extrémités 91 et 92 du fil constituant la première extrémité 10 du doigt de fermeture intérieur 9 et étant pour cela recourbées à 90° l'une en opposition de l'autre pour être engagées dans deux trous transversaux décalés formant l'articulation du doigt de fermeture intérieur 9. Le fil peut avantageusement être en acier, de diamètre 1 à 2 mm environ.

Le fil élastique est formé de façon que son élasticité propre tende à assurer le rappel du doigt de fermeture intérieur 9 vers la position fermée, de sorte qu'il n'est pas besoin d'un autre moyen de rappel élastique.

Dans le premier mode de réalisation illustré sur la figure 1, les deux extrémités recourbées 91 et 92 du fil pénètrent dans deux trous transversaux prévus dans la première extrémité 2 du corps de mousqueton 1.

Dans le second mode de réalisation illustré sur la figure 2, les deux extrémités recourbées 91 et 92 du fil sont engagées dans deux trous transversaux prévus dans un court bras intérieur 50 du doigt de fermeture extérieur 5, et sont ainsi au voisinage de la première extrémité 2 du corps de mousqueton.

Dans le mode de réalisation illustré sur la figure 1, le doigt de fermeture extérieur 5 est également formé d'un fil de matériau élastiquement flexible plié pour former une boucle allongée dont les extrémités recourbées 51 et 52 sont engagées dans deux trous transversaux respectifs décalés de la première extrémité 2 du corps de mousqueton 1 pour constituer la première extrémité 6 articulée du doigt de fermeture extérieur 5. L'élasticité propre du fil assure également le rappel du doigt de fermeture extérieur 5 en position fermée.

Dans le second mode de réalisation illustré sur la figure 2, le doigt de fermeture extérieur 5 a une structure de tige traditionnelle, généralement cylindrique, légèrement cintrée, et il faut prévoir des moyens de rappel élastiques pour le rappeler en position fermée. Selon une première alternative, on peut prévoir un moyen de rappel élastique traditionnel, sous forme d'un ressort de compression engagé dans un logement axial du doigt de fermeture pour venir en appui sur une languette solidaire du corps de mousqueton 1. Selon une seconde alternative, on profite de l'effort de rappel élastique du doigt de fermeture intérieur 9, en utilisant la disposition illustrée sur la figure 2 : dans ce cas, la première extrémité 6 du doigt de fermeture extérieur 5 comporte un bras intérieur 50 se développant dans l'espace intérieur du mousqueton et sur lequel s'articule le doigt de fermeture intérieur 9. L'élasticité propre du fil constituant le doigt de fermeture intérieur 9 assure alors le rappel des deux doigts de fermeture 5 et 9 en position fermée.

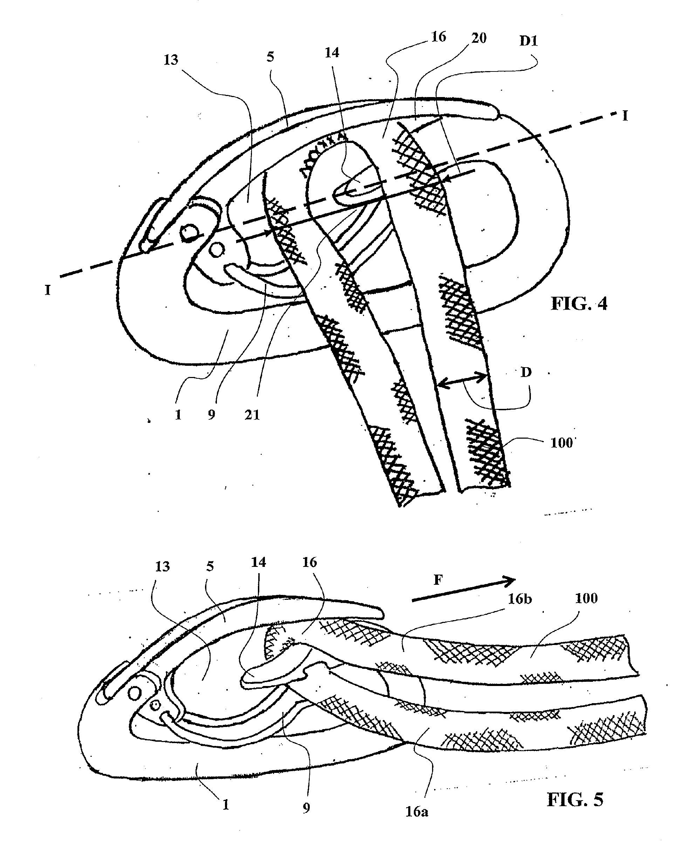

Dans tous les modes de réalisation illustrés sur les figures, le mousqueton comprend en outre un espace d'insertion 13, aménagé entre les deux doigts de fermeture 9 et 5, et de largeur L suffisante pour permettre l'engagement d'une boucle 16 (figures 4 et 5) comme cela sera décrit plus loin. En pratique, la largeur L de l'espace d'insertion 13 peut être, dans sa zone de plus grande valeur, comprise entre 2,5 cm et 4 cm environ dans les mousquetons habituellement utilisés pour la pratique de l'alpinisme et de la spéléologie, cette largeur L étant adaptée pour l'engagement d'une boucle 16 de corde de diamètre habituel. Avantageusement, la largeur L peut être de 3 cm environ.

L'espace d'insertion 13 comporte un rétrécissement progressif en direction de la seconde extrémité 11 ou 7 des doigts de fermeture 5 ou 9, comme on le voit sur les figures 1 et 2. En pratique, le doigt de fermeture extérieur 5 est légèrement convexe vers l'extérieur, donnant au mousqueton un contour extérieur similaire des contours connus des mousquetons habituellement utilisés. A l'inverse, le doigt de fermeture intérieur 9 est fortement convexe vers l'intérieur du mousqueton. Pour autoriser les mouvements d'ouverture suffisants comme illustré par la flèche 12, les deux branches latérales 9a et 9b du fil élastique telles qu'illustrées sur la figure 3 sont écartées l'une de l'autre selon un écartement légèrement supérieur au diamètre du fil formant le corps de mousqueton 1, de sorte que, en position ouverte, les deux branches latérales 9a et 9b du fil peuvent pivoter de part et d'autre de la branche centrale du corps de mousqueton 1.

De façon avantageuse, comme illustré sur les figures 1 et 2, la zone de surface intérieure 3b et la zone de surface extérieure 3a, zones sur lesquelles les secondes extrémités respectives 11 et 7 des doigts de fermeture 9 et 5 viennent en appui en position fermée, sont en retrait de la seconde extrémité 3 du corps de mousqueton 1. De la sorte, la seconde extrémité 3 du corps de mousqueton 1 forme un nez d'engagement 14 qui dépasse dans l'espace d'insertion 13.

Le nez d'engagement 14 peut avantageusement comporter un tronçon d'extrémité qui est à l'écart de l'un et l'autre des doigts de fermeture 5 et 9, réalisant deux interstices 20 et 21 entre le nez d'engagement 14 et respectivement le doigt de fermeture extérieur 5 et le doigt de fermeture intérieur 9. Le tronçon d'extrémité du nez d'engagement 14 peut également présenter, dans le plan général du mousqueton, une largeur L1 qui va en se réduisant vers l'extrémité du nez d'engagement 14 ou seconde extrémité 3 du corps de mousqueton 1.

Le tronçon d'extrémité du nez d'engagement 14 peut avantageusement avoir une longueur L2 (figure 2) supérieure ou égale au rayon du lien 100 (figures 4 et 5) formant la boucle.

On considère maintenant les figures 4 et 5 qui expliquent la façon par laquelle on peut utiliser un mousqueton de sécurité selon l'invention.

Sur la figure 4, le mousqueton est à l'état fermé, comme sur la figure 3. L'espace d'insertion 13 est suffisamment large pour autoriser l'utilisateur à introduire une boucle 16 formée du lien 100 que l'on veut passer dans le mousqueton. Par exemple, la boucle 16 est formée d'une corde 100 dont le diamètre D est approprié pour l'usage que l'on veut en faire. Par exemple, le diamètre D est de l'ordre de 6 à 11 mm. De la sorte, la boucle 16 a un diamètre D1 compris entre 2,5 cm et 4 cm environ, en fonction du diamètre de la corde. On choisit la largeur L de l'espace d'insertion 13 pour être peu différente du diamètre D1 de la boucle 16 du lien tel que la corde 100 à utiliser.

L'utilisateur peut ainsi introduire la boucle 16 dans l'espace d'insertion 13, en maintenant la boucle 16 dans un plan sensiblement perpendiculaire à la direction moyenne I-I des doigts de fermeture 5 et 9.

Ensuite, comme illustré sur la figure 5, l'utilisateur peut pousser la boucle 16 selon une force F longitudinale dans la direction moyenne I-I des doigts de fermeture 5 et 9, tout en maintenant la boucle 16 dans un plan perpendiculaire à cette direction I-I. De la sorte, la boucle 16 s'engage dans le rétrécissement progressif, et, dans le cas où le mousqueton comporte un nez d'engagement 14, la boucle 16 s'engage autour du nez d'engagement 14 dans les interstices 20 et 21 (figures 1 et 4). Par son mouvement de déplacement dans le sens de la force F, la boucle 16 repousse simultanément les deux doigts de fermeture 5 et 9 vers leurs positions ouvertes, de sorte que l'un des brins 16a de la boucle 16 vient s'engager dans l'espace intérieur du mousqueton, tandis que l'autre brin 16b de la boucle 16 se retrouve à l'extérieur du mousqueton. En final, le lien 100 tel que la corde traverse l'espace intérieur du mousqueton, ce qui est le but recherché. Dans cette position, le lien 100 ne peut plus sortir du mousqueton, quel que soit l'effort exercé sur les doigts de fermeture 5 et 9, l'un des doigts étant toujours en butée en position de fermeture quelle que soit la direction de l'effort.

Le mouvement de la boucle 16 dans le mousqueton pour la pénétration, comme illustré sur les figures 4 et 5, est un mouvement qui peut être exécuté d'une seule main, ce qui facilite considérablement l'utilisation du mousqueton.

On comprendra que le nez d'engagement 14 à tronçon d'extrémité qui est à l'écart de l'un et l'autre des doigts de fermeture 5 et 9 facilite le positionnement de la boucle 16 de part et d'autre de la seconde extrémité 3 du corps de mousqueton 1. Néanmoins, on peut concevoir un mousqueton selon l'invention fonctionnant de façon relativement satisfaisante même en l'absence d'un écartement entre le tronçon d'extrémité du nez d'engagement 14 et l'un ou l'autre des doigts de fermeture 5 et 9.

La présente invention n'est pas limitée aux modes de réalisation qui ont été explicitement décrits, mais elle en inclut les diverses variantes et généralisations contenues dans le domaine des revendications ci-après.

## Revendications

1. Mousqueton de sécurité pour accrochage d'un lien (100), comprenant :
- un corps de mousqueton (1) en anneau ouvert ayant une première extrémité (2) et une seconde extrémité (3) en regard l'une de l'autre et séparées par une ouverture (4),
- un doigt de fermeture extérieur (5) à deux extrémités (6, 7), articulé selon sa première extrémité (6) sur la première extrémité (2) du corps de mousqueton (1) pour pivoter par rapport au corps de mousqueton (1) dans une première direction (8) vers l'extérieur du mousqueton, entre une position fermée dans laquelle sa seconde extrémité (7) est au contact d'une zone de surface extérieure (3a) du corps de mousqueton (1) et une position ouverte dans laquelle sa seconde extrémité (7) est à l'écart de la seconde extrémité (3) du corps de mousqueton (1), et avec des moyens de rappel élastiques sollicitant le doigt de fermeture extérieur (5) vers sa position fermée,
- un doigt de fermeture intérieur (9) à deux extrémités (10, 11), articulé selon sa première extrémité (10) sur ou au voisinage de la première extrémité (2) du corps de mousqueton (1) pour pivoter par rapport au corps de mousqueton (1) dans une seconde direction (12) vers l'intérieur du mousqueton, entre une position fermée dans laquelle sa seconde extrémité (11) vient au contact d'une zone de surface intérieure (3b) du corps de mousqueton (1), et une position ouverte dans laquelle sa seconde extrémité (11) est à l'écart de la seconde extrémité (3) du corps de mousqueton (1), avec des moyens de rappel élastiques sollicitant le doigt de fermeture intérieur (9) vers la position fermée,
**caractérisé en ce que** :
- un espace d'insertion (13) est aménagé entre les deux doigts de fermeture (5, 9),
- l'espace d'insertion (13) a une largeur (L) suffisante pour permettre l'engagement du lien (100) formé en une boucle (16) orientée perpendiculairement à la direction moyenne des doigts de fermeture (5, 9),
- l'espace d'insertion (13) a un rétrécissement progressif en direction de la seconde extrémité (7, 11) des doigts de fermeture (5, 9),
- la zone de surface intérieure (3b) et la zone de surface extérieure (3a) sont en retrait de la seconde extrémité (3) du corps de mousqueton (1), ladite seconde extrémité (3) du corps de mousqueton (1) formant un nez d'engagement (14) qui dépasse dans l'espace d'insertion (13).

2. Mousqueton de sécurité selon la revendication 1, **caractérisé en ce que** la largeur (L) de l'espace d'insertion (13) est peu différente du diamètre (D1) de la boucle (16).

3. Mousqueton de sécurité selon l'une des revendications 1 ou 2, **caractérisé en ce que** la largeur (L) de l'espace d'insertion (13) est, dans sa zone de plus grande valeur, comprise entre 2,5 cm et 4 cm environ, avantageusement de 3 cm environ.

4. Mousqueton de sécurité selon l'une quelconque des revendications 1 à 3, **caractérisé en ce que** le nez d'engagement (14) comporte un tronçon d'extrémité qui est à l'écart de l'un et l'autre des doigts de fermeture (5, 9), réalisant deux interstices (20, 21) entre le nez d'engagement (14) et respectivement le doigt de fermeture extérieur (5) et le doigt de fermeture intérieur (9).

5. Mousqueton de sécurité selon la revendication 4, **caractérisé en ce que** le tronçon d'extrémité du nez d'engagement (14) présente, dans le plan général du mousqueton, une largeur (L1 ) qui va en se réduisant vers l'extrémité (3) du nez d'engagement (14).

6. Mousqueton de sécurité selon l'une des revendications 4 ou 5, **caractérisé en ce que** le tronçon d'extrémité du nez d'engagement (14) a une longueur (L2) supérieure ou égale au rayon du lien (100) formant la boucle (16).

7. Mousqueton de sécurité selon l'une quelconque des revendications 1 à 6, **caractérisé en ce que** le doigt de fermeture intérieur (9) est formé d'un fil de matériau élastiquement flexible plié pour former une boucle allongée dont les extrémités recourbées (91, 92) sont engagées dans deux trous transversaux respectifs décalés de la première extrémité (2) du corps de mousqueton (1) pour constituer la première extrémité (10) articulée du doigt de fermeture intérieur (9), l'élasticité du fil formant le doigt de fermeture intérieur (9) assurant son rappel en position fermée.

8. Mousqueton de sécurité selon la revendication 7, **caractérisé en ce que** le doigt de fermeture extérieur (5) est une tige généralement cylindrique, articulée sur la première extrémité (2) du corps de mousqueton (1).

9. Mousqueton de sécurité selon la revendication 8, **caractérisé en ce que** la première extrémité (6) du doigt de fermeture extérieur (5) comporte un bras intérieur (50) se développant dans l'espace intérieur du mousqueton et sur lequel s'articule le doigt de fermeture intérieur (9), ledit doigt de fermeture intérieur (9) étant formé d'un fil de matériau élastiquement flexible plié pour former une boucle dont les extrémités recourbées (91, 92) sont engagées dans deux trous transversaux respectifs décalés du bras intérieur (50) pour constituer la première extrémité (10) articulée du doigt de fermeture intérieur (9), l'élasticité propre du fil formant le doigt de fermeture intérieur (9) assurant alors le rappel des deux doigts de fermeture (5, 9) en position fermée.

10. Mousqueton de sécurité selon la revendication 7, **caractérisé en ce que** le doigt de fermeture extérieur (5) est formé d'un fil de matériau élastiquement flexible plié pour former une boucle allongée dont les extrémités recourbées (51, 52) sont engagées dans deux trous transversaux respectifs décalés de la première extrémité (2) du corps de mousqueton (1) pour constituer la première extrémité (6) articulée du doigt de fermeture extérieur (5), l'élasticité propre du fil formant le doigt de fermeture extérieur (5) assurant son rappel en position fermée.
